## Europäisches Patentamt

## European Patent Office

## Office européen des brevets

(11) Veröffentlichungsnummer: **0 294 542**
**B1**

(12) **EUROPÄISCHE PATENTSCHRIFT**

(45) Veröffentlichungstag der Patentschrift:
26.09.90

(51) Int. Cl.⁵: **F16K 1/52**

(21) Anmeldenummer: **88103218.9**

(22) Anmeldetag: **02.03.88**

(54) Ventil.

(30) Priorität: **25.05.87 DE 3717565**

(43) Veröffentlichungstag der Anmeldung:
**14.12.88 Patentblatt 88/50**

(45) Bekanntmachung des Hinweises auf die Patenterteilung:
**26.09.90 Patentblatt 90/39**

(84) Benannte Vertragsstaaten:
**AT BE CH DE FR GB IT LI NL SE**

(56) Entgegenhaltungen:
**DE-A- 1 450 579**
**DE-A- 2 505 657**
**DE-A- 2 725 720**
**US-A- 1 806 462**

(73) Patentinhaber: **Schubert & Salzer Maschinenfabrik Aktiengesellschaft, Friedrich-Ebert-Strasse 84, D-8070 Ingolstadt(DE)**

(72) Erfinder: **Popescu, Ian Calin, Dipl.-Ing., Friedrich-Ebert-Strasse 55, D-4150 Krefeld(DE)**
Erfinder: **Lange, Rainer, Dr., Beethovenstrasse 3, D-8858 Neuburg/Donau(DE)**

ACTORUM AG

**Beschreibung**

Die vorliegende Erfindung betrifft ein Ventil mit einem mittels eines Ventilschaftes verstellbaren Verschlußorgan sowie einem Strömungsteiler.

In der Praxis sind häufig bei Steuer- und Regelventilen sehr große Druckunterschiede anzutreffen zwischen der Zuflußseite und der Abflußseite. Dies kann darauf zurückzuführen sein, daß in bezug auf die Leitung die Ventile überdimensioniert sind, oder seine Ursache auch im speziellen Aufbau des Ventils haben. In allen diesen Fällen treten große Verschleiß- und Lärmprobleme auf. Bei der Steuerung von Flüssigkeiten, z.B. heißem Wasser, tritt insbesondere das Problem der Kavitation dadurch auf, daß das Wasser nach Verlassen der gesteuerten Durchflußöffnung verdampft. Anschließend baut sich dann der normale Druck wieder auf, wobei die Dampfblasen zusammenbrechen und starke Druckwellen erzeugen, die dann zu einem besonders starken Verschleiß und einer extrem starken Lärmentwicklung führen.

Gemäß einer platzsparenden Lösung ist dem Ventil eine Lochplatte nachgeschaltet (Sonderdruck 3320-18 der Firma Eckardt AG, Stuttgart: "Das "Akustische Feld" von Regelarmaturen und Auswirkungen von in- tegrierten bzw. nachgeschalteten Widerstandsstrukturen auf die regelungstechnischen Parameter" von H. Siemers oder DE-A 2 505 657). Mit Hilfe einer solchen Lochplatte erfolgt der Druckabbau in zwei Stufen, nämlich sowohl am Ventil als auch an der Lochplatte, so daß auf diese Weise erreicht werden kann, daß sich der Druckabbau am Ventil nicht mehr innerhalb des kritischen Bereichs bewegt. Solch eine Lochplatte hat jedoch andererseits den Nachteil, daß dieses Ziel nicht immer in zufriedenstellender Weise erreicht wird, da die Lochplatte nur bei einem bestimmten Öffnungsgrad des Verschlußorganes des Ventils seine volle Wirkung entfalten kann.

Aufgabe der vorliegenden Erfindung ist es daher, ein Ventil zu schaffen, das unabhängig vom Öffnungsgrad des Ventils mit Sicherheit dem Verschleiß und der Lärmentwicklung entgegenwirkt.

Diese Aufgabe wird erfindungsgemäß dadurch gelöst, daß der Strömungsteiler einen Stellantrieb aufweist, mit dessen Hilfe der Strömungsteiler in Abhängigkeit vom Öffnungsgrad des Verschlußorganes einstellbar ist. Da der Druckabfall bei unterschiedlich weit freigegebenem Verschlußorgan unterschiedlich groß ist, läßt sich durch den einstellbaren Strömungsteiler stets eine optimale Anpassung an die Durchflußbedinungen erzielen, so daß die erfindungsgemäße Absperr- oder Regelvorrichtung geräuscharm arbeitet und auch weniger zu Verschleiß neigt als bisher bekannte Vorrichtungen mit Lochplatten.

Vorteilhafterweise weist der Strömungsteiler zwei zusammenarbeitende Steuerscheiben auf, von denen eine stationär angeordnet ist und gegenüber welcher die andere zur Änderung der freigegebenen Lochgröße verstellbar ist. Die beiden zusammenarbeitenden Lochscheiben können auf diese Weise die Löcher das eine Mal restlos freigeben, während sie in anderen Stellungen diese Öffnungen bis zu einem gewissen Grad abdecken und dadurch verkleinern können. Diese lineare oder Dreh-Verstellung der beweglichen Lochscheibe erfolgt dabei in Anpassung an den Öffnungsgrad des Verschlußorganes, so daß der Wirkungsgrad der Lochscheibe immer in optimaler Weise zur Geltung kommt, da er entsprechend dem Öffnungsgrad des Ventils ausgewählt werden kann.

Gemäß einer zweckmäßigen Ausbildung des Erfindungsgegenstandes ist der Strömungsteiler als Gleitschieberventil ausgebildet, wobei statt eines nur als Strömungsteiler einsetzbaren Elementes solche Elemente Anwendung finden können, die außer für die Reduzierung des Verschleißes und der Lärmentwicklung auch für andere Zwecke eingesetzt werden können.

Zur Erzielung einer besonders platzsparender Bauweise weist das Gleitschieberventil vorzugsweise ein flanschloses Gehäuse auf und ist zwischen den einander zugewandten Flanschen des Ventils und einer Rohrleitung angeordnet. Eine solche Vorrichtung läßt sich in einfacher Weise wegen des geringen Platzbedarfs auch nachträglich in einer Rohrleitung installieren.

Prinzipiell kann ein derartiger Strömungsteiler dem Ventil vorgeschaltet werden, da auch dann ein mehrstufiger Druckabbau erreicht wird. Besonders zweckmäßig ist jedoch eine Anordnung des Strömungsteilers im Anschluß an ein Ventil. Gegebenenfalls kann eine solche Anordnung nach dem Absperr- oder Regelventil auch zusätzlich zu einem ersten, in Durchflußrichtung vor dem Ventil angeordneten Strömungsteiler vorgesehen werden.

Zweckmäßigerweise ist dem Ventilschaft des Ventils ein dessen Position ermittelnder Wegaufnehmer zugeordnet. Auf diese Weise läßt sich eine korrekte Einstellung des Strömungsteilers in einfacher Weise in Anpassung an die Position des Verschlußorganes des Ventils erreichen.

Um eine automatische Anpassung des Strömungsteilers an den Öffnungsgrad des Ventiles zu erreichen, ist gemäß einer besonders vorteilhaften Ausführung des Erfindungsgegenstandes der Wegaufnehmer über eine Steuervorrichtung mit einem Stellantrieb des Strömungsteilers verbunden.

Prinzipiell kann die Steuervorrichtung zur Steuerung des Stellantriebs des Strömungsteilers verschieden ausgebildet sein. Eine Anpassung an unterschiedliche, besonders günstige Relationen zwischen dem Öffnungsgrad des Ventils und des Strömungsteilers läßt sich jedoch dadurch erreichen, wenn gemäß einer weiteren Ausbildung des Erfindungsgegenstandes die Steuervorrichtung als Prozessor ausgebildet ist.

Die Erfindung ermöglicht in einfacher Weise die Reduzierung des Verschleiß- und Lärmproblems bei Ventilen. Darüber hinaus läßt sich eine solche Vorrichtung in einfacher Weise nachrüsten, insbesondere dann, wenn als Strömungsteiler ein flanschloses Gleitschieberventil Anwendung findet. Bei Ausfall des Ventils und/oder seiner Dichtfunktion (größer werdende Leckage aufgrund von Verschleiß) läßt sich eine Steuerung des Durchflusses auch mit Hilfe des Strömungsteilers erzielen.

Die Erfindung wird nachstehend anhand eines in einer Zeichnung dargestellten Ausführungsbeispieles näher erläutert.

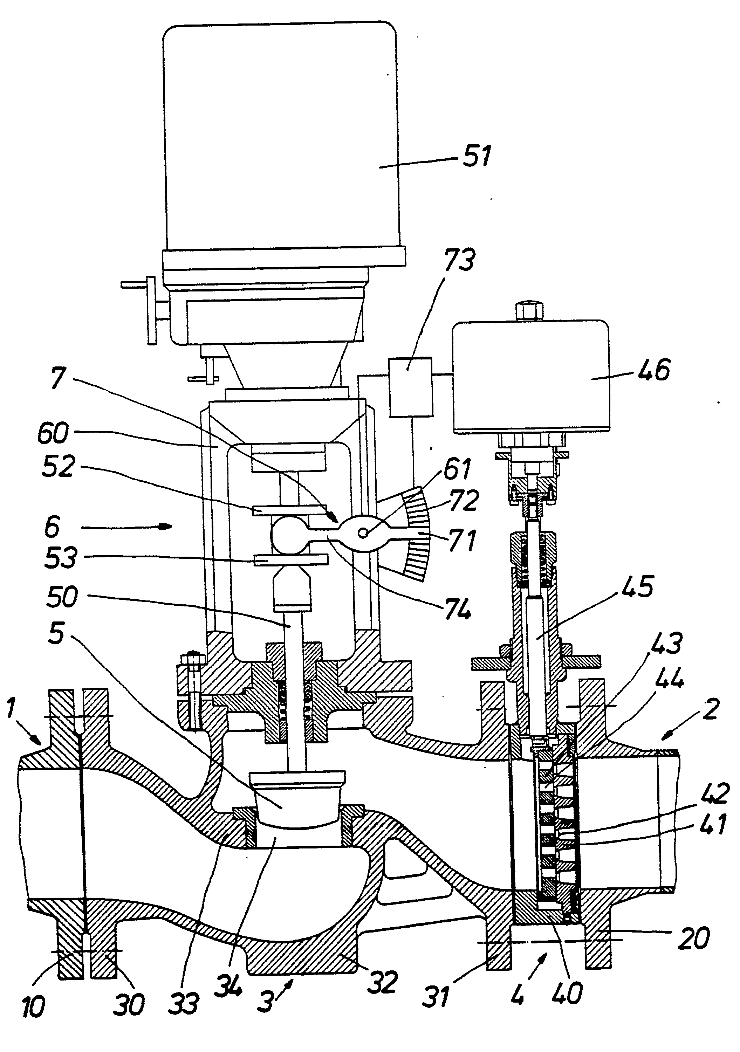

Wie die einzige Zeichnung zeigt, sind zwischen einer Zuflußleitung 1 und einer Abflußleitung 2 ein Ventil 3, z.B. ein Absperrventil oder auch ein Regelventil, sowie ein Strömungsteiler 4 angeordnet.

Im gezeigten Ausführungsbeispiel besitzen sowohl die Zuflußleitung 1 als auch die Abflußleitung 2 Flansche 10 bzw. 20, mittels welchen die Zuflußleitung 1 und die Abflußleitung 2 mit Flanschen 30 bzw. 31 des Ventiles 3 verbunden sind.

Das gezeigte Ventil 3 besitzt in üblicher Weise ein Gehäuse 32, das in einer Zwischenwand 33 eine Durchflußöffnung 34 aufweist. Diese Durchflußöffnung kann durch ein Verschlußorgan 5 abgesperrt bzw. mehr oder weniger freigegeben werden.

Das Verschlußorgan ist am Ende eines Ventilschaftes 50 angeordnet, der mit seinem außerhalb dem Gehäuse 32 befindlichen Ende mit einem Antrieb 51 verbunden ist.

Zwischen dem Gehäuse 32 und dem Antrieb 51 befindet sich eine Laterne 6, die das Gehäuse 32 und den Antrieb 51 im gegenseitigen Abstand voneinander hält. Der sich durch die Laterne 6 hindurcherstreckende Ventilschaft 50 weist im Bereich der Laterne 6 im gegenseitigen Abstand voneinander zwei Mitnehmer 52 und 53 auf, zwischen denen ein Ende 70 eines zweiarmigen Hebels 74 endet. Dieser Hebel 74 ist schwenkbar auf einer Achse 61 gelagert, die von einer Strebe 60 der Laterne 6 getragen wird. Der Hebel 74 ist Teil eines Potentiometers, der einen Wegaufnehmer 7 bildet und den Stellweg des Verschlußorganes 5 abtastet und anzeigt. Zu diesem Zweck arbeitet sein anderes Ende 71 mit einem Widerstand 72 zusammen. Je nach Schwenkposition des Hebels 74 ändert sich somit der wirksame Widerstand und damit der Spannungsabfall am Potentiometer.

Der Widerstand 72 und der Hebel 74 sind jeweils mit einer Steuervorrichtung 73 verbunden, die prinzipiell in beliebiger Weise ausgebildet sein kann und deshalb beim gezeigten Ausführungsbeispiel lediglich schematisch angedeutet ist.

Der Strömungsteiler 4 ist beim gezeigten Ausführungsbeispiel als Gleitschieberventil mit einem flanschlosen Gehäuse 40 ausgebildet, das zwischen den einander zugewandten Flanschen 20 der Abflußleitung 2 und 31 des Ventils 3 angeordnet ist.

Das Gleitschieberventil besitzt in bekannter Weise eine stationär angeordnete Steuerscheibe 41 mit mehreren Schlitzen 42 sowie eine hierzu bewegliche Steuerscheibe 43 mit Schlitzen 44. Die bewegliche Steuerscheibe 43 ist über einen Ventilschaft 45 mit einem Stellantrieb 46 verbunden, welcher seinerseits steuermäßig mit der zuvor genannten Steuervorrichtung 73 in Verbindung steht.

Wenn das Ventil 3 mit Hilfe seines Verschlußorganes 5 den Durchfluß freigibt, so entsteht im Bereich dieses Verschlußorganes 5 entsprechend dem Öffnungsgrad ein mehr oder weniger großer Druckabfall aufgrund der hohen Geschwindigkeit des gesteuerten Mediums. Insbesondere bei heißen Medien wird auf diese Weise teilweise der Siedepunkt überschritten, so daß das Medium, z.B. Wasser, in Dampf übergeht. Anschließend hieran baut sich der Mediumdruck wieder auf, wobei die Dampfblasen bei der Rückführung in den flüssigen Aggregatszustand einen großen Lärm verursachen. Um diesen Lärm zu reduzieren, wird das Medium im Bereich des Strömungsteilers 4 in mehrere Teilströme aufgeteilt. Dadurch werden die Strömungsvorgänge beeinflußt, so daß ein wesentlich geringeres Geräusch verursacht wird. Da die Strömungsvorgänge von der Geschwindigkeit des strömenden Mediums im Bereich zwischen Durchflußöffnung 34 und Verschlußorgan 5 abhängen, muß auch die Öffnungsgröße der Löcher im Strömungsteiler 4 entsprechend bemessen werden. Dies geschieht dadurch, daß der durch den Hebel 74 und den Widerstand 72 gebildete Wegaufnehmer 7 am Ventilschaft 50 die Stellung des Verschlußorganes 5 abtastet und dadurch einen entsprechenden Spannungsabfall erzeugt. Dieser Spannungsabfall wird der Steuervorrichtung 73 gemeldet, die in entsprechender Weise nun den Stellantrieb 46 beaufschlägt, damit dieser die bewegliche Ventilplatte 43 entsprechend gegenüber der stationären Ventilscheibe 41 verstellt.

Die Öffnungen in den Steuerscheiben 41 und 43 brauchen nicht unbedingt als Schlitze 42 bzw. 44 ausgebildet zu sein, sondern können entsprechend dem Verwendungszweck auch eine andere Form aufweisen. Ebenfalls ist es nicht notwendig, daß eine bestimmte Anzahl von runden oder länglichen Schlitzen vorgesehen ist. Im Fall von Schlitzen können diese sich je nach Anwendungszweck quer oder längs oder auch schräg zu der Bewegungsrichtung der beweglichen Steuerscheibe 43 erstrecken. Die bewegliche Steuerscheibe 43 kann dabei linear verstellbar sein oder ihre Relativstellung gegenüber der stationären Steuerscheibe 41 auch durch Verdrehen ändern. Da der Durchfluß durch das Ventil 3 gesteuert wird, ist es auch nicht erforderlich, daß die beiden Steuerscheiben 41 und 43 dichtend aneinander anliegen. Wenn die Steuerscheiben 41 und 43 dichtend aneinanderliegen, d.h. wenn der Strömungsteiler 4 als Gleitschieberventil ausgebildet ist, so läßt sich hierdurch gegebenenfalls auch der Durchfluß steuern, wenn dies durch Ausfall des Ventils 3, z.B. bei zu großer Leckage bei beschädigter Dichtung, einmal notwendig werden sollte.

Das Auftreten z.B. von Kavitation oder Stoßwellen bei kompressiblen Medien ist zwar abhängig vom Öffnungsgrad des Verschlußorganes 5, steht jedoch mit diesem nicht in linearer Verbindung. Eine Anpassung zwischen Öffnungsgrad des Strömungsteilers 4 an den Öffnungsgrad des Verschlußorganes 5 und damit an die auftretenden überkritischen Strömungsverhältnisse ist dadurch möglich, daß die Steuervorrichtung 73 die Hubbewegung des Ventilschaftes 50 nicht linear in eine Hubbewegung des Ventilschaftes 45 des Strömungsteilers umwandelt. Dies ist besonders einfach, wenn die Steuervorrichtung 73 als Prozessor ausgebildet ist, der durch Austausch von Platinen, Programmieren etc. an die gewünschte Charakteristik angepaßt werden kann.

In der dargestellten Ausführung wird der Wegaufnehmer 7 durch das Potentiometer gebildet, das über die Steuervorrichtung 73 mit dem Stellantrieb 46 des Strömungsteilers 4 verbunden ist. Dies ist jedoch nicht unbedingte Voraussetzung. Der Wegaufnehmer 7 kann auch in anderer Weise ausgebildet sein und beispielsweise auch induktiv arbeiten. Außerdem kann der Wegaufnehmer 7 auch in den Antrieb 51 des Ventils 3 integriert sein.

In der einfachsten Ausbildung ist das Verschlußorgan 5 des Ventiles 3 manuell verstellbar. Ebenso kann auch der Strömungsteiler 4 manuell verstellbar sein, wobei die Anpassung an den Öffnungsgrad des Ventiles 3 nach Gehör erfolgen kann. Gemäß einer weiteren Alternative ist dem beispielsweise als Handrad ausgebildeten Antrieb 51 oder dem Ventilschaft 50 eine Anzeigevorrichtung zugeordnet, die den Öffnungsgrad des Ventiles 3 erkennen läßt, so daß der Strömungsteiler 4 entsprechend eingestellt werden kann, wozu auch hier ggf. eine die jeweilige Position anzeigende Anzeigevorrichtung vorgesehen sein kann. Eine Einstellung des Strömungsteilers 4 kann dabei nach vorgegebenen Einstellvorschriften erfolgen, die aufgrund vorangegangener Versuche festgelegt worden sind und die einem bestimmten Öffnungsgrad des Ventiles 3 eine bestimmte Stellung des Strömungsteilers 4 zuordnen.

Wenn auch aus Platzgründen vorteilhaft, so ist es ebenfalls nicht zwangsläufige Voraussetzung, daß das Gleitschieberventil ein flanschloses Gehäuse 40 aufweist. So ist es beispielsweise möglich, die Zuflußleitung 1 und die Abflußleitung 2 mit einem Ventil 3 und dem Strömungsteiler 4 mittels üblicher Verschraubungen zu verbinden. Auch muß der Strömungsteiler 4 nicht unbedingt als Gleitschieberventil ausgebildet sein, da er normalerweise keine Absperr- oder Regelfunktion zu erfüllen hat.

Auch das Ventil 3 kann unterschiedlich ausgebildet sein. So kann ein Absperrventil, ein Regelventil, ein Hubventil, ein Drehkörperventil, ein Schieberventil etc. Anwendung finden.

## Patentansprüche

1. Ventil mit einem mittels eines Ventilschaftes (50) verstellbaren Verschlußorgan (5) und einem Strömungsteiler (4), **dadurch gekennzeichnet, daß** der Strömungsteiler (4) einen Stellantrieb (46) aufweist, mit dessen Hilfe der Strömungsteiler (4) in Abhängigkeit vom Öffnungsgrad des Verschlußorganes (5) des Ventils (3) einstellbar ist.

2. Ventil nach Anspruch 1, **dadurch gekennzeichnet, daß** der einstellbare Strömungsteiler (4) zwei zusammenarbeitende Steuerscheiben (41, 43) aufweist, von denen eine stationär angeordnet ist und zu welcher die andere zur Änderung der freigegebenen Lochgröße verstellbar ist.

3. Ventil nach Anspruch 2, **dadurch gekennzeichnet, daß** der Strömungsteiler (4) als Gleitschieberventil ausgebildet ist.

4. Ventil nach Anspruch 3, **dadurch gekennzeichnet, daß** das Gleitschieberventil ein flanschloses Gehäuse (40) aufweist und zwischen den einander zugewandten Flanschen (20, 31) des Ventils (3) und einer Rohrleitung (1, 2) angeordnet ist.

5. Ventil nach einem oder mehreren der Ansprüche 1 bis 4, **dadurch gekennzeichnet, daß** der Strömungsteiler (4) dem Ventil (3) nachgeordnet ist.

6. Ventil nach einem oder mehreren der Ansprüche 1 bis 5, **dadurch gekennzeichnet, daß** dem Ventilschaft (50) des Ventils (3) ein dessen Position ermittelnder Wegaufnehmer (7) zugeordnet ist.

7. Ventil nach Anspruch 6, **dadurch gekennzeichnet, daß** der Wegaufnehmer (7) über eine Steuervorrichtung (73) mit einem Stellantrieb (46) des Strömungsteilers (4) verbunden ist.

8. Ventil nach Anspruch 7, **dadurch gekennzeichnet, daß** die Steuervorrichtung (73) als Prozessor ausgebildet ist.

## Claims

1. A valve with a closure member (5) which can be adjusted by means of a valve stem (50) and a flow divider (4), characterised in that the flow divider (4) has an actuator (46) by means of which the flow divider (4) can be adjusted as a function of the degree of opening of the closure member (5) of the valve (3).

2. A valve according to claim 1, characterised in that the adjustable flow divider (4) has two cooperating control discs (41, 43), of which one is stationarily arranged and relative to which the other can be adjusted for altering the cleared hole size.

3. A valve according to claim 2, characterised in that the flow divider (4) is constructed as a slide valve.

4. A valve according to claim 3, characterised in that the slide valve has a flange-free housing (40) and is arranged between the mutually facing flanges (20, 31) of the valve (3) and a pipe (1, 2).

5. A valve according to one or more of claims 1 to 4, characterised in that the flow divider (4) follows the valve (3).

6. A valve according to one or more of claims 1 to 5, characterised in that the valve stem (50) of the valve (3) is allocated a path pickup (7) which determines the position thereof.

7. A valve according to claim 6, characterised in that the path pickup (7) is connected via a control device (73) to an actuator (46) of the flow divider (4).

8. A valve according to claim 7, characterised in that the control device (73) is constructed as a processor.

## Revendications

1. Soupape comportant un obturateur (5), réglable au moyen d'une tige (50) de soupape, et un diviseur (4) de flux, caractérisée en ce que le diviseur (4) de flux présente un dispositif (46) d'entraînement et de réglage à l'aide duquel le diviseur (4) de flux peut être réglé en fonction du degré d'ouverture de l'obturateur (5) de la soupape (3).

2. Soupape selon la revendication 1, caractérisée en ce que le diviseur de flux, réglable/présente deux disques (41, 43) de commande, qui coopèrent entre eux, dont l'un est monté fixe et l'autre est réglable par rapport à celui-ci en vue de la modification de la dimension libre ou dégagée des trous.

3. Soupape selon la revendication 2, caractérisée en ce que le diviseur (4) de flux est constitué par une soupape à tiroir coulissant, ou distributeur.

4. Soupape selon la revendication 3, caractérisée en ce que le distributeur présente un corps (40) dépourvu de brides et est disposé entre les brides (20, 31) tournées l'une vers l'autre, de la soupape (3) et d'une conduite tubulaire (1, 2).

5. Soupape selon une ou plusieurs des revendications 1 à 4, caractérisée en ce que le diviseur (4) de flux est disposé en aval de la soupape (3).

6. Soupape selon une ou plusieurs des revendications 1 à 5, caractérisée en ce qu'un capteur (7) de course est associé à la tige (50) de la soupape (3) dont il décèle la position.

7. Soupape selon la revendication 6, caractérisée en ce que le capteur (7) de course est relié, par l'intermédiaire d'un dispositif (73) de commande, à un dispositif (46) de réglage du diviseur (4) de flux.

8. Soupape selon la revendication 7, caractérisée en ce que le dispositif (73) de commande est constitué par un processeur.